# FASCICULE DE BREVET EUROPEEN

(11) **EP 3 115 852 B1**
(45) Date de publication et mention de la délivrance du brevet: **28.03.2018**
(21) Numéro de dépôt: 16170873.0
(22) Date de dépôt: 23.05.2016
(51) Int. Cl.: G04B 17/34, G04B 13/02

(54) **COMPOSANT HORLOGER AVEC UNE PIECE A SURFACE DE SOUDAGE AMELIOREE**
UHRKOMPONENTE MIT EINEM TEIL MIT VERBESSERTER SCHWEISSOBERFLÄCHE
TIMEPIECE COMPONENT HAVING A PART WITH IMPROVED WELDING SURFACE

(30) Priorité: 16.06.2015 EP 15172319
(43) Date de publication de la demande: 11.01.2017
(73) Titulaire: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Goulette, Ludivine

(56) Documents cités:
- EP-A1- 1 445 670
- EP-A1- 2 107 433
- EP-A1- 2 196 867
- EP-A1- 2 317 406
- EP-A2- 0 860 651
- CH-B1- 698 794
- US-B1- 6 528 931

## Description

### Domaine de l'invention

L'invention se rapporte à un composant horloger avec une pièce à surface de soudage améliorée et, plus précisément, une telle pièce permettant une adaptation de sa surface pour un soudage amélioré.

### Arrière-plan de l'invention

Il est connu du document WO 2015/185423 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne doive pas excéder 0,5 micromètre sous peine que celles-ci ne puissent pas être soudées

### Résumé de l'invention

Le but de la présente invention est de pallier tout ou partie les inconvénients cités précédemment en proposant un composant horloger comportant une nouvelle pièce avec au moins une surface de contact autorisant une adaptation géométrique garantissant son assemblage avec un autre organe par soudage.

A cet effet, selon un premier mode de réalisation, l'invention se rapporte à un composant horloger comportant une pièce ajustée et soudée sur un organe muni d'une surface sensiblement horizontale et d'une surface sensiblement verticale caractérisé en ce que la pièce comporte au moins une face avec une paroi sensiblement rectiligne adjacente à une paroi oblique afin de garantir une configuration isostatique de l'ajustage de la pièce pour améliorer son soudage sur l'organe.

Selon le premier mode de réalisation, la pièce offre avantageusement une face avec une surface de soudage réduite combinée à une configuration isostatique de l'ajustage de la pièce pour diminuer l'interstice à une valeur garantissant son soudage sur un organe.

De plus, selon un deuxième mode de réalisation, l'invention se rapporte à un composant horloger comportant une pièce ajustée et soudée sur un organe muni d'une surface sensiblement horizontale et d'une surface sensiblement verticale caractérisé en ce que la pièce comporte au moins une face avec une paroi sensiblement rectiligne qui est partiellement ajourée afin de garantir une configuration isostatique de l'ajustage de la pièce pour améliorer son soudage sur l'organe.

Selon le deuxième mode de réalisation, la pièce offre avantageusement une partie flexible capable de s'adapter à la géométrie d'un organe combinée à une configuration isostatique de l'ajustage de la pièce pour diminuer l'interstice à une valeur garantissant son soudage sur un organe.

Conformément à d'autres variantes avantageuses de l'invention :
- ladite au moins une face de la pièce est ajustée sur la surface sensiblement verticale ou sur la surface sensiblement horizontale de l'organe ;
- la pièce est à base de silicium ou à base de céramique ;
- la pièce comporte en outre au moins un revêtement partiel de métal, d'oxyde de silicium, de nitrure de silicium, de carbure de silicium ou d'un allotrope du carbone ;
- l'organe comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier - spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document WO 2015/185423 ;
- la figure 5 est une représentation en coupe d'un assemblage selon un premier mode de réalisation de l'invention ;
- la figure 6 est une représentation en coupe d'un assemblage selon une variante du premier mode de réalisation de l'invention ;
- la figure 7 est une représentation en coupe d'un assemblage selon un deuxième mode de réalisation de l'invention ;
- la figure 8 est une représentation en perspective d'une pièce selon un deuxième mode de réalisation de l'invention ;
- la figure 9 est une représentation en coupe d'un assemblage selon une combinaison des premier et deuxième modes de réalisation de l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une autre pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

Comme expliqué ci-dessus, l'autre pièce peut comporter le même type de matériau ou un autre type de matériau. Ainsi, préférentiellement, l'autre pièce est à base de métal et peut comporter un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

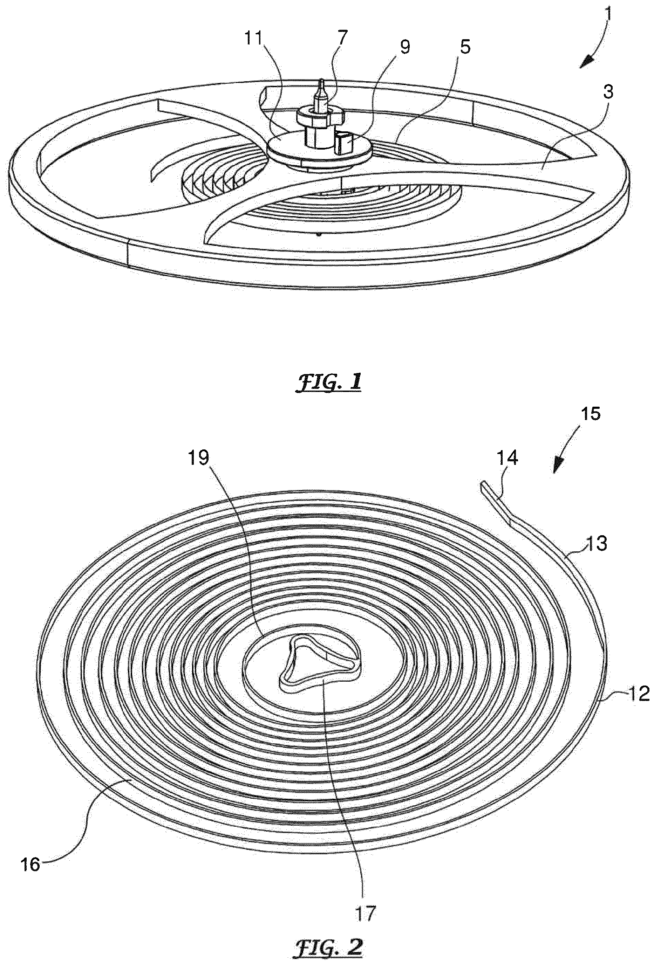

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'arbre notamment pour autoriser son centrage par rapport à ce dernier.

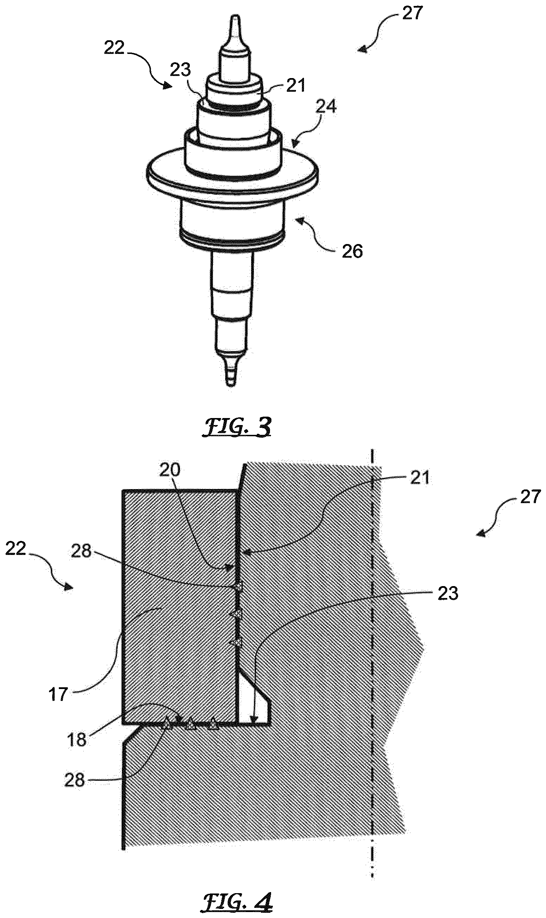

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 est soudée à la virole 17 comme enseigné dans le document WO 2015/185423.

Toutefois, dans le cadre du développement de l'enseignement du document WO 2015/185423, il est rapidement ressorti que l'interstice entre les pièces ne doive pas excéder 0,5 micromètre sous peine que celles-ci ne puissent pas être soudées.

Selon un premier mode de réalisation, le composant horloger comprend une pièce à surface de contact réduite, voire limitée à une ligne de contact, pour garantir une configuration isostatique de l'ajustage de la pièce sur un organe afin de diminuer l'interstice avec l'organe à une valeur inférieure ou égale à 0,5 micromètre.

Ainsi, dans le premier mode de réalisation, la pièce à surface de soudage améliorée formant un spiral 35 comporte un corps, formant notamment une virole 37, agencé pour coopérer avec un organe 27 muni d'une surface sensiblement horizontale 23 et d'une surface sensiblement verticale 21. Selon le premier mode de réalisation, la pièce 35 comporte au moins une face avec une paroi sensiblement rectiligne 30 adjacente à une paroi oblique 31 afin de réduire la surface de soudage de la pièce.

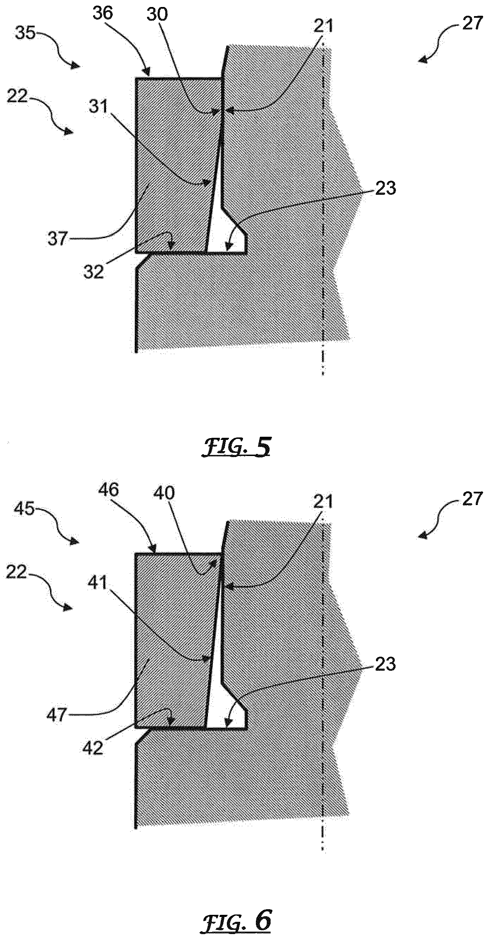

Comme visible à la figure 5, en comparaison de la figure 4, ladite au moins une face de la pièce forme une paroi oblique 31 partant de la face inférieure 32 (destinée à être montée sur la portée 23 sensiblement horizontale) puis une paroi sensiblement rectiligne 30 adjacente (qui est sensiblement perpendiculaire par rapport à la face inférieure 32) jusqu'à la face supérieure 36. On comprend également que la face inférieure 32 comporte une largeur plus restreinte que la face inférieure 18 de la figure 4. La paroi oblique 31 forme ainsi une surface conique.

Ce premier avantage s'additionne à une configuration isostatique de l'ajustage de la virole 37 sur l'arbre 27. En effet, la surface de contact réduite de la paroi sensiblement rectiligne 30 contre la tige 21 autorise la face inférieure 32 de la virole 37 à pouvoir s'adapter à la géométrie de la portée 23, c'est-à-dire qu'elle peut suivre la géométrie de la portée 23 avec plus de degré de liberté, afin de diminuer l'interstice à une valeur inférieure ou égale à 0,5 micromètre entre la face inférieure 32 et la portée 23. On remarque que cette réflexion est aussi valable entre la paroi sensiblement rectiligne 30 et la tige 21.

Selon une variante illustrée à la figure 6, la paroi oblique 41 pourrait même former volontairement quasiment toute ladite au moins une face entre la face inférieure 42 et la face supérieure 46 afin que la paroi sensiblement rectiligne 40 forme quasiment une ligne de contact avec la tige 21 au lieu de la paroi plus restreinte 30 illustrée à la figure 5. On comprend que la paroi oblique 41 de la virole 47 forme également une surface conique, le spiral 45 conservant les mêmes avantages combinés que le premier mode de réalisation de la figure 5.

Ainsi, après l'ajustage de la virole 37, 47 du spiral 35, 45 sur le diamètre 22 de l'arbre 27, le soudage par laser entre la face inférieure 32, 42 et la portée 23 est garanti car la virole 37, 47 offre une face inférieure 32, 42 réduite et une configuration isostatique de l'ajustage sur l'arbre 27 permettant de diminuer l'interstice avec l'arbre 27 à une valeur inférieure ou égale à 0,5 micromètre entre la face inférieure 32, 42 et la portée 23.

De plus, de manière alternative ou additionnelle, dans la configuration de la figure 5, il est également possible de souder la paroi sensiblement rectiligne 30 contre la tige 21.

Selon un deuxième mode de réalisation, le composant horloger comporte une pièce avec une surface rigide réduite, voire limitée à une ligne de contact, pour garantir une configuration isostatique de l'ajustage de la pièce afin de diminuer l'interstice avec un organe à une valeur inférieure ou égale à 0,5 micromètre.

Ainsi, dans le deuxième mode de réalisation, la pièce à surface de soudage améliorée formant un spiral 55 comporte un corps, formant notamment une virole 57, agencé pour coopérer avec un organe 27 muni d'une surface sensiblement horizontale 23 et d'une surface sensiblement verticale 21. Selon le deuxième mode de réalisation, la pièce 55 comporte au moins une face avec une paroi sensiblement rectiligne 50 qui est partiellement ajourée apportant une élasticité supplémentaire afin de garantir une configuration isostatique de l'ajustage de la pièce sur l'organe pour améliorer son soudage.

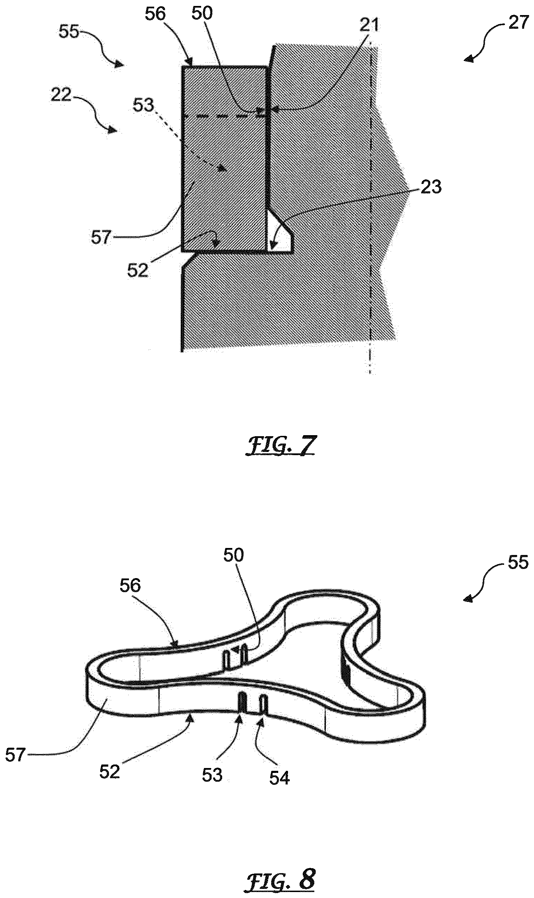

Comme visible aux figures 7 et 8, ladite au moins une face de la pièce forme une paroi sensiblement rectiligne 50, partant de la face inférieure 52 (destinée à être montée sur la portée 23 sensiblement horizontale) jusqu'à la face supérieure 56, qui comporte des ajourages 53, 54 permettant de découpler une partie rigide destinée à coopérer avec la tige 21 et une partie plus élastique destinée à permettre à la face inférieure 52 de s'adapter à la géométrie de la portée 23. On comprend donc que la face inférieure 52 ne comporte pas une largeur plus restreinte que la face inférieure 18 de la figure 4 mais qui est capable de se déformer pour compenser un éventuel défaut de planéité de la portée 23.

On comprend que ce premier avantage s'additionne à une configuration isostatique de l'ajustage de la virole 57 sur l'arbre 27. En effet, la partie rigide formant une surface de contact réduite contre la tige 21 autorise la face inférieure 52 de la virole 57 à pouvoir encore mieux s'adapter à la géométrie de la portée 23, c'est-à-dire qu'elle peut suivre la géométrie de la portée 23 avec plus de degré de liberté, afin de diminuer l'interstice à une valeur inférieure ou égale à 0,5 micromètre entre la face inférieure 52 et la portée 23.

Ainsi, après l'ajustage de la virole 57 du spiral 55 sur le diamètre 22 de l'arbre 27, le soudage par laser entre la surface inférieure 52 et la portée 23 est garanti car la virole 57 offre une face inférieure 52 capable de se déplacer pour suivre la portée 23 et une configuration isostatique de l'ajustage sur l'arbre 27 permettant de diminuer l'interstice avec l'arbre 27 à une valeur inférieure ou égale à 0,5 micromètre entre la surface inférieure 52 et la portée 23.

On remarque que cette réflexion est aussi valable entre la paroi sensiblement rectiligne 50 et la tige 21 puisque, lorsque la face inférieure 52 se déplace, la partie plus élastique de la paroi sensiblement rectiligne 50 s'écarte de la tige 21. Par conséquent, de manière alternative ou additionnelle, il est également possible de souder la partie rigide de la paroi sensiblement rectiligne 50 contre la tige 21.

Bien entendu, la présente invention ne se limite pas à l'exemple illustré mais est susceptible de diverses variantes et modifications qui apparaîtront à l'homme de l'art. En particulier, les premier et deuxième modes de réalisation peuvent être combinés pour bénéficier de leurs effets conjugués.

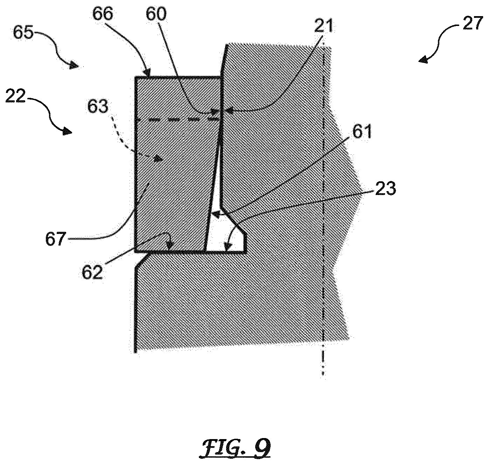

Ainsi, comme visible à la figure 9, ladite au moins une face de la pièce formant un spiral 65 peut comporter une paroi oblique 61 partant de la face inférieure 62 (destinée à être montée sur la portée 23 sensiblement horizontale) puis une paroi sensiblement rectiligne 60 adjacente (qui est sensiblement perpendiculaire par rapport à la face inférieure 62) jusqu'à la face supérieure 66. On comprend donc que la face inférieure 62 comporte une largeur plus restreinte que la face inférieure 18 de la figure 4.

Ce premier avantage s'additionne à une configuration isostatique de l'ajustage de la virole 67 sur l'arbre 27. En effet, la surface de contact réduite de la face sensiblement rectiligne 60 contre la tige 21 autorise la face inférieure 62 de la virole 67 à pouvoir s'adapter à la géométrie de la portée 23, c'est-à-dire qu'elle peut suivre la géométrie de la portée 23 avec plus de degré de liberté, afin de diminuer l'interstice à une valeur inférieure ou égale à 0,5 micromètre entre la face inférieure 62 et la portée 23. On remarque que cette réflexion est aussi valable entre la paroi sensiblement rectiligne 60 et la tige 21.

On comprend que ces premier et deuxième avantages s'additionnent à une partie élastique de la virole 67 sur l'arbre 27. En effet, ladite au moins une face 60, 61 de la pièce formant le spiral 65 peut comporter en outre des ajourages 63 permettant de découpler une partie rigide 60 destinée à coopérer avec la tige 21 et une partie plus élastique 61 destinée à permettre à la face inférieure 62 de s'adapter à la géométrie de la portée 23. En effet, la partie plus élastique 61 est capable de se déformer pour compenser un éventuel défaut de planéité de la portée 23.

Ainsi, après l'ajustage de la virole 67 du spiral 65 sur le diamètre 22 de l'arbre 27, le soudage par laser entre la face inférieure 62 et la portée 23 est garanti car la virole 67 offre une surface inférieure 62 de surface réduite et capable de se déplacer pour suivre la portée 23 ainsi qu'une configuration isostatique de l'ajustage sur l'arbre 27 permettant de diminuer l'interstice avec l'arbre 27 à une valeur inférieure ou égale à 0,5 micromètre entre la face inférieure 62 et la portée 23.

Bien entendu, de manière alternative ou additionnelle, il est également possible de souder la partie rigide de la paroi sensiblement rectiligne 60 contre la tige 21.

## Revendications

1. Composant horloger comportant une pièce (35, 45, 55, 65) ajustée et soudée sur un organe (27) muni d'une surface (23) sensiblement horizontale et d'une surface (21) sensiblement verticale **caractérisé en ce que** la pièce (35, 45, 55, 65) comporte au moins une face (30, 31, 32, 36, 40, 41, 42, 46, 50, 52, 56, 60, 61, 62, 66) avec une paroi sensiblement rectiligne (30, 40, 50, 60) adjacente à une paroi oblique (31, 41, 61) afin de garantir une configuration isostatique de l'ajustage de la pièce (35, 45, 55, 65) pour améliorer son soudage sur l'organe (27).

2. Composant horloger comportant une pièce (35, 45, 55, 65) ajustée et soudée sur un organe (27) muni d'une surface (23) sensiblement horizontale et d'une surface (21) sensiblement verticale **caractérisé en ce que** la pièce (35, 45, 55, 65) comporte au moins une face (30, 31, 32, 36, 40, 41, 42, 46, 50, 52, 56, 60, 61, 62, 66) avec une paroi sensiblement rectiligne (30, 40, 50, 60) qui est partiellement ajourée afin de garantir une configuration isostatique de l'ajustage de la pièce (35, 45, 55, 65) pour améliorer son soudage sur l'organe (27).

3. Composant horloger selon la revendication 1 ou 2, **caractérisé en ce que** ladite au moins une face de la pièce (35, 45, 55, 65) est ajustée sur la surface (21) sensiblement verticale de l'organe (27).

4. Composant horloger selon la revendication 1 ou 2, **caractérisé en ce que** ladite au moins une face de la pièce (35, 45, 55, 65) est ajustée sur la surface (23) sensiblement horizontale de l'organe (27).

5. Composant horloger selon l'une des revendications précédentes, **caractérisé en ce que** la pièce (35, 45, 55, 65) est à base de silicium ou à base de céramique.

6. Composant horloger selon la revendication précédente, **caractérisé en ce que** la pièce (35, 45, 55, 65) comporte en outre au moins un revêtement partiel de métal, d'oxyde de silicium, de nitrure de silicium, de carbure de silicium ou d'un allotrope du carbone.

7. Composant horloger selon l'une des revendications précédentes, **caractérisé en ce que** l'organe (27) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

## Patentansprüche

1. Uhrenkomponente, umfassend ein Teil (35, 45, 55, 65), das an einem Organ (27) angeordnet und verschweißt ist, das mit einer im Wesentlichen horizontalen Oberfläche (23) und mit einer im Wesentlichen vertikalen Oberfläche (21) versehen ist, **dadurch gekennzeichnet, dass** das Teil (35, 45, 55, 65) mindestens eine Fläche (30, 31, 32, 36, 40, 41, 42, 46, 50, 52, 56, 60, 61, 62, 66) mit einer im Wesentlichen geradlinigen Wand (30, 40, 50, 60) aufweist, die zu einer schrägen Wand (31, 41, 61) benachbart ist, um eine isostatische Konfiguration der Anordnung des Teils (35, 45, 55, 65) zu gewährleisten, um seine Verschweißung an dem Organ (27) zu verbessern.

2. Uhrenkomponente, umfassend ein Teil (35, 45, 55, 65), das an einem Organ (27) angeordnet und verschweißt ist, das mit einer im Wesentlichen horizontalen Oberfläche (23) und mit einer im Wesentlichen vertikalen Oberfläche (21) versehen ist, **dadurch gekennzeichnet, dass** das Teil (35, 45, 55, 65) mindestens eine Fläche (30, 31, 32, 36, 40, 41, 42, 46, 50, 52, 56, 60, 61, 62, 66) mit einer im Wesentlichen geradlinigen Wand (30, 40, 50, 60) aufweist, die teilweise durchbrochen ist, um eine isostatische Konfiguration der Anordnung des Teils (35, 45, 55, 65) zu gewährleisten, um seine Verschweißung an dem Organ (27) zu verbessern.

3. Uhrenkomponente nach Anspruch 1 oder 2, **dadurch gekennzeichnet, dass** die mindestens eine Fläche des Teils (35, 45, 55, 65) auf der im Wesentlichen vertikalen Oberfläche (21) des Organs (27) angeordnet ist.

4. Uhrenkomponente nach Anspruch 1 oder 2, **dadurch gekennzeichnet, dass** die mindestens eine Fläche des Teils (35, 45, 55, 65) auf der im Wesentlichen horizontalen Oberfläche (23) des Organs (27) angeordnet ist.

5. Uhrenkomponente nach einem der vorhergehenden Ansprüche, **dadurch gekennzeichnet, dass** das Teil (35, 45, 55, 65) auf Siliciumbasis oder auf Keramikbasis hergestellt ist.

6. Uhrenkomponente nach dem vorhergehenden Anspruch, **dadurch gekennzeichnet, dass** das Teil (35, 45, 55, 65) ferner mindestens eine Teilbeschichtung aus Metall, Siliciumoxid, Siliciumnitrid, Siliciumcarbid oder ein Kohlenstoffallotrop aufweist.

7. Uhrenkomponente nach einem der vorhergehenden Ansprüche, **dadurch gekennzeichnet, dass** das Organ (27) eine Eisenlegierung, eine Kupferlegierung, Nickel oder eine seiner Legierungen, Titan oder eine seiner Legierungen, Gold oder eine seiner Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

## Claims

1. Timepiece component comprising a part (35, 45, 55, 65) fitted and welded onto a member (27) provided with a substantially horizontal surface (23) and a substantially vertical surface (21), **characterized in that** the part (35, 45, 55, 65) includes at least one face (30, 31, 32, 36, 40, 41, 42, 46, 50, 52, 56, 60, 61, 62, 66) with a substantially rectilinear wall (30, 40, 50, 60) adjacent to an oblique wall (31, 41, 61) to ensure that the part (35, 45, 55, 65) is fitted in an isostatic configuration to improve the welding thereof onto the member (27).

2. Timepiece component comprising a part (35, 45, 55, 65) fitted and welded onto a member (27) provided with a substantially horizontal surface (23) and a substantially vertical surface (21), **characterized in that** the part (35, 45, 55, 65) includes at least one face (30, 31, 32, 36, 40, 41, 42, 46, 50, 52, 56, 60, 61, 62, 66) with a substantially rectilinear wall (30, 40, 50, 60) which is partially pierced to ensure that the part (35, 45, 55, 65) is fitted in an isostatic configuration to improve the welding thereof onto the member (27).

3. Timepiece component according to claim 1 or 2, **characterized in that** said at least one face of the part (35, 45, 55, 65) is fitted onto the substantially vertical surface (21) of the member (27).

4. Timepiece component according to claim 1 or 2, **characterized in that** said at least one face of the part (35, 45, 55, 65) is fitted onto the substantially horizontal surface (23) of the member (27).

5. Timepiece component according to any of the preceding claims, **characterized in that** the part (35, 45, 55, 65) is made from silicon or from ceramic.

6. Timepiece component according to the preceding claim, **characterized in that** the part (35, 45, 55, 65) also includes at least a partial coating of metal, silicon oxide, silicon nitride, silicon carbide or an allotrope of carbon.

7. Timepiece component according to any of the preceding claims, **characterized in that** the member (27) includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.
